# EUROPEAN PATENT SPECIFICATION

(11) **EP 2 048 062 B1**
(45) Date of publication and mention of the grant of the patent: **19.06.2013**
(21) Application number: 08166044.1
(22) Date of filing: 07.10.2008
(51) Int. Cl.: B62D 7/16, B62D 7/20, B62D 9/00

(54) **Improvements in or relating to vehicle steering mechanisms**
Verbesserungen bei oder im Zusammenhang mit Fahrzeuglenkungen
Améliorations de ou associées aux mécanismes de direction d'un véhicule

(30) Priority: 08.10.2007 GB 0719585
(43) Date of publication of application: 15.04.2009
(73) Proprietor: Nissan Motor Iberica SA, 08040 Barcelona (ES)
(72) Inventor: Jiménez, Pedro, 08040 Barcelona (ES)
(74) Representative: Holmes, Matthew William

(56) References cited:
- DE-A1- 3 820 642
- JP-A- 11 270 549
- US-A- 3 801 207
- US-A- 6 074 125

## Description

The present invention relates to a drag link for the steering mechanism of a vehicle and, more particularly, to a drag link for the steering mechanism of a truck.

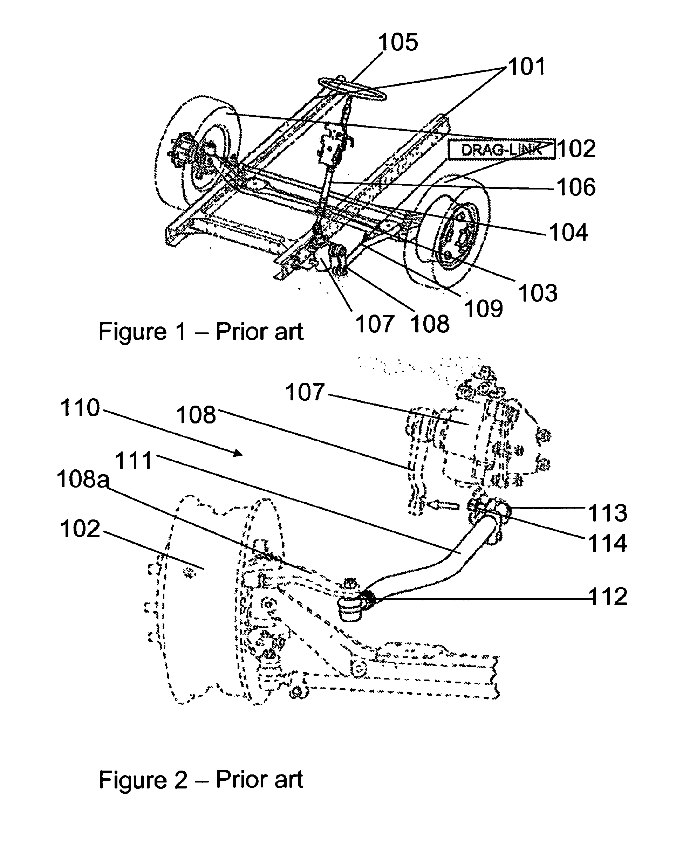

Figure 1 shows a standard steering mechanism 100 for use in a Light Commercial Vehicle (LCV) or a Heavy Goods Vehicle (HGV).

Figure 1 shows vehicle chassis rails 101, road wheels 102, front axle 103 and tie rod 104. The steering mechanism includes a steering wheel 105, steering column 106, a steering box 107, a Pitman arm or crank 108, a steering arm 108a and a drag link 109. The drag link 109 is mounted in the longitudinal or fore/aft direction, substantially parallel to the chassis rails 101.

Ideally, the drag link should be straight in order to maximise the efficiency of the system. However, it is rare to reach this ideal as the drag link must be shaped to allow the front left road wheel to turn right without fouling the drag link. The drag link 109 shown in Figure 1 is shaped in order to enable it to conform to the packaging constraints placed on it.

When the steering wheel 105 is turned, the rotational motion is transmitted by the steering column 106 to the steering box 107. The crank 108 translates the rotational motion into substantially linear motion. The linear motion is then transmitted by the drag link 109 to the steering arm 108a which is perpendicular to the road wheel 102. The tie rod 104 connects the turning force applied to the wheels 102 in response to the turning of the steering wheel 105.

For ease of use, it is preferable that the central position of the steering wheel 105 equates to the situation wherein the wheels 102 are pointing straight ahead. As a result of tolerances in the individual parts and also tolerances at the interfaces between parts once they are assembled, it is not uncommon that this situation cannot be attained without adjustment of the steering system.

It is therefore known to provide a drag link the length of which can be adjusted in order to improve this situation.

Figure 2 shows a steering system 110 incorporating an adjustable length drag link 111.

The steering system 110 includes an adjustable length drag link 111; a fixed ball joint 112 adjacent the wheel 102 and an adjustable ball joint 113 adjacent the crank 108. The adjustable ball joint 113 is mounted to the crank using a standard pin connector 114. However, the adjustable ball joint 113 is mounted to the drag link 111 using a screw threaded connection. An internal surface of the drag link 111 adjacent the ball joint 113 is screw threaded and the adjustable ball joint 113 has a male connector that is also screw-threaded. When the adjustable ball joint 113 is disengaged from the crank 108, the adjustable ball joint 113 can be rotated relative to the drag link 110. In order to re-engage with the crank 108, the pin connector 114 must be aligned with the crank 108. Therefore the minimum adjustment of the length of the drag link 111 is limited to the pitch of the thread provided on the internal surface of the drag link 111 because the adjustable ball joint must be rotated in multiples of 360° in order to re-engage with the crank 108.

Furthermore, in order to adjust the length of the drag link, it is necessary to disconnect the drag link, estimate the extent of the adjustment required, adjust the drag link, reassemble the drag link at the new length and check whether or not this is correct. If the new length is not correct then the whole process must be repeated in order to make a further adjustment to the length of the drag link. Obviously, this procedure is extremely time consuming and therefore inconvenient for the efficiency of the production line. Indeed, on some production lines there is insufficient time to adjust the drag link length on the line and therefore the adjustment is left to a post production line check.

The arrangement illustrated in Figure 2 and described above does not allow adjustments in the length of the drag link that are smaller than the pitch of the screw thread that is provided at the interface between the adjustable ball joint 113 and the drag link 111. As a result, it is sometimes not possible to attain the optimal configuration in which the central position of the steering wheel equates exactly with the wheels pointed straight ahead.

Other known examples of linkages have been discussed in JP11270549 and US6074125. Automotive steerage turnbuckles for linkages are also discussed in US3801207.

A further problem that is encountered with steering systems used in trucks in which the drag link lies substantially parallel to the chassis rails, is that, in the case of an impact occurring in the vicinity of the drag link, the drag link may transmit forces from the impact through the steering mechanism to the steering column. In this event, undesirable forces may be transmitted from the drag link to the steering column, which may diminish the energy management performance of the steering system.

It is against this technological background that the present invention has been made.

According to the present invention there is provided a drag link for a vehicle, the apparatus comprising: a first drag link portion and a second drag link portion for a steering system, characterised in that the drag link has an adjustment means for connecting the first drag link to the second drag link portion to provide continuous variation in the length of the apparatus; at least one stopper means for maintaining the length of the apparatus under normal load conditions and for allowing the first and/or second portion to move relative to the adjustment means under excessive load in order to manage the energy of the excessive load; wherein the adjustment means is an adjustment tube and the stopper means is a first stopper ring and second stopper ring, the first drag link portion further comprising a left-handed threaded pin and the second drag link portion further comprises a right-handed threaded pin, and the adjustment tube has a left-handed threaded section and a right handed threaded section. Each stopper ring is configured to abut the respective threaded pin and wherein each stopper ring is sized to contact an inner surface of the respective drag link portion and to allow sliding contact with the inner surface of the respective drag link portion under excessive load conditions so that the length of the drag link under normal load conditions and the first and/or second drag links move relative to the adjustment tube under excessive load in order to manage the energy of the excessive load.

The modified drag link provides two improved functions in comparison with a standard drag link. It enables the length of the drag link to be modified and/or adjusted without a minimum increment dependent upon the pitch of the screwthread. This allows a much more accurate alignment to be carried out between the wheel positioning and the steering wheel of the vehicle. In addition, the drag link is collapsible under excessive load conditions such as those that can arise during an impact. By providing a drag link that is collapsible the energy of the impact can be managed locally and the transmission of forces through the steering system to the steering wheel can be substantially reduced. Furthermore, the system can be adjusted on the vehicle without requiring a cycle of disassembly, adjustment, reassembly and checking. Both of these additional features are provided with little or no change to the overall packaging envelope of the drag link. As packaging space for the drag link can be limited, minimising the change in the packaging envelope of the drag link is important.

The combination of opposing threads enables the continuous variation in length of the drag link. As the adjustment tube is turned it either draws both threaded pins into the adjustment tube and thereby reduces the overall length of the drag link, or it gradually expels the threaded pins from the adjustment tube and thereby increases the overall length of the drag link.

The drag link further comprises a second stopper ring. The drag link system is symmetrical and therefore a second stopper ring is provided in order to enable the second threaded pin 40 to move relative to the second portion of the drag link under excessive load conditions.

Each stopper ring may be configured to abut the respective threaded pin. Each stopper ring may also be sized to contact an inner surface of the respective drag link portion and to allow sliding contact with the inner surface of the respective drag link portion under excessive load conditions.

The stopper rings are provided inside the respective first and second portions of the drag link so that their functionality cannot be compromised by inadvertent interplay with other vehicle components that are packaged adjacent the drag link. This configuration also ensures that changes to the envelope of the drag link itself are minimised. This enables the drag link to be retrofitted into any suitable vehicle steering system.

The drag link may further comprise a protective sleeve and a clamp configured locally to deform or clamp the adjustment tube to prevent relative movement between the threaded pins and the adjustment tube.

The protective sleeve and clamp are applied to the drag link once the length of the drag link has been optimised by turning the adjustment tube. Once the length of the drag link has been set, the protective sleeve and clamp are applied in order to prevent further unwanted changes in the length of the drag link.

The protective sleeve may closely interface with the adjustment tube. Furthermore, the protective sleeve closely interfaces with the first and second drag link portions. By providing the close fittings between the various parts of the system, changes to the overall envelope of the drag link are minimised.

The adjustment tube has an outer surface that may be configured to accommodate a tool to rotate the adjustment tube to adjust the length of the drag link. The provision of multiple faces for interfacing with, for example, a spanner or wrench facilitates the rotation of the adjustment tube with ease and accuracy.

Similarly, castellations or indentations may be provided around the periphery of the adjustment tube to op-operate with a tool such as a crescent wrench.

The drag link may further comprise means for indicating the position of the first drag link portion relative to the adjustment tube. This indicating means may comprise a gauge on the first portion configured so that the edge of the adjustment tube overlaps the gauge and thereby indicates their relative position. The provision of a gauge allows the operative to confirm the extent of the adjustment in the length of the drag link.

The drag link may be provided in a vehicle having chassis rails. The drag link may be configured to lie substantially parallel to the vehicle chassis rails. Alternatively, the drag link may be configured to lie substantially perpendicular to the vehicle chassis rails. In this alternative configuration, the provision of a collapsible drag link mitigate against kick-back forces which are perpendicular to the chassis rails.

The present invention will now be described, by way of example only, with reference to the accompanying drawings in which;
Figure 3 is an exploded view of a drag link according to the present invention;
Figure 4 shows a cut along the longitudinal axis of the drag link shown in Figure 3;
Figure 5 shows a part-perspective view of the drag link shown in Figure 3;
Figure 6 shows a top view of the drag link shown in Figure 3;
Figure 7a shows a side view of the drag link shown in Figure 3 identifying
Figures 7b to 7f show cuts through the drag link as indicated in Figure 7a; and
Figure 8 shows the drag link shown in Figures 3 to 7 in the context of a vehicle steering system.

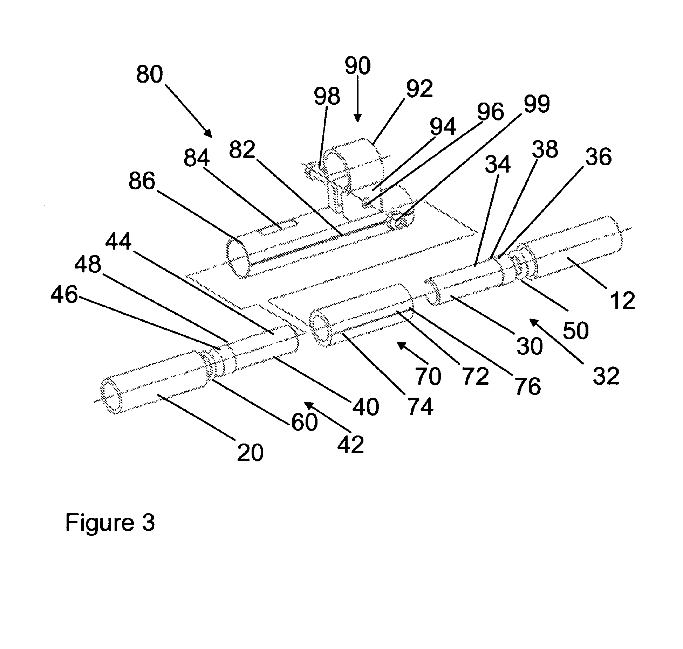

   Figures 3 to 7 show various views of a drag link 10 according to the present invention. The drag link 10 is divided into a first portion 12 and a second portion 20. In figures 3 to 7 the first 12 and second 20 portions are shown truncated for ease of illustration. The sections of the drag link 10 that are illustrated in Figures 3 to 7 are not adjacent the connections of the drag link to adjacent parts of the steering system of which the drag link forms a part. The illustrated sections form a substantially straight section of the drag link 10.
   The first portion 12 of the drag link 10 is configured to interface with an adjustment system 32 comprising a threaded pin 30 and a stopper ring 50. The second portion 20 of the drag link 10 is provided with a corresponding adjustment system 42 comprising a threaded pin 40 and stopper ring 60. The adjustment systems 32, 42 engage with an adjustment tube 70. By providing a threaded pin 30, 40 in each of the first 12 and second 20 portions, the extent of the adjustment available is maximised.
   The first 12 and second 20 portions of the drag link 10 are hollow to the extent illustrated in Figure 3. The remainder of the first 12 and second 20 portions of the drag link 10 may be solid. The hollow part of the first 12 and second 20 portions of the drag link accommodate the adjustment systems 32, 42.
   The threaded pins 30, 40 are elongate and include a male threaded portion 34, 44 and a stopper 36, 46. The threaded pins 30, 40 are solid, but they may be hollow provided they are still sufficiently strong to function as required. The stoppers 36, 46 have a larger diameter than the threaded portions. Between the threaded portions 34, 44 and the stoppers 36, 46 there is a step change providing a radial abutment face 38, 48.
   The diameter of the stoppers 36, 46 is selected such that they can interface with the internal surface of the respective first 12 or second 20 portion of the drag link 10. The diameter of the stoppers 36, 46 is selected so that the interface is a press fit.
   The threaded portions 34, 44 of the threaded pins 30, 40 provide male connector parts that interface with corresponding female screw threads on the internal surface of the adjustment tube 70. One of the threaded portions 34 has a right-handed thread and the other threaded portion 44 has a left-handed thread. The internal surface of the adjustment tube 70 is divided into a first section 72 that has a corresponding female left-handed thread and a second section 74 that has a female right-handed thread.
   When the drag link 10 is assembled the threaded pin 30 is inserted into the first portion 12 and the threaded pin 40 is inserted into the second portion 20. The threaded portions 34, 44 of the threaded pins 30, 40 are then inserted into the adjustment tube 70. Because the adjustment tube 70 has first and second sections 72, 74 with opposing threads, turning the adjustment tube in a first direction relative to the first 12 and second 20 portions draws the threaded pins 30, 40 into the adjustment tube 70. Reversing the direction of rotation of the adjustment tube forces the threaded pins 30, 40 outward, thus elongating the drag link 10.
   The overall length of the drag link is reduced as the adjustment tube 70 is rotated in the first direction, pulling the threaded pins 30, 40 into the tube 70. The minimum length of the drag link 10 is defined by the condition in which the threaded portions 34, 44 fill the adjustment tube 70 so that they cannot be drawn further into the tube 70.
   The length of the threaded pins 30, 40 dictates the maximum change in length of the drag link. For example, the change in length provided by each of the threaded pins is in the region of 20mm. In order to maintain the structural integrity of the drag link, there must be an overlap between the adjustment tube and the threaded pins 30, 40. The extent of this overlap will be dictated by the materials from which the threaded pins 30, 40, adjustment tube 70 and first 12 and second 20 drag link portions are formed.
   Although the outer surface of the adjustment tube 70 is smooth in Figure 3, the surface can alternatively be provided with a plurality of distinct faces that are sized to interface with a suitable tool such as a spanner or wrench. By rotating the adjustment tube 70 the overall length of the drag link 10 can be altered. There is no minimum increment for this adjustment as the adjustment tube 70 can be rotated by any fraction of a single revolution to provide continuous variation in the length of the drag link 10. Changes in the length of the drag link as a result of the rotation of the adjustment tube can be made when the drag link is fitted to a vehicle. It is not necessary to disconnect the drag link from the vehicle in order to alter the length of the drag link.
   In order to protect the adjustment tube 70 and threaded pins 30, 40 from the external environment a protective sleeve 80 is provided. The adjustment tube 70 has substantially the same outer diameter as the first 12 and second 20 portions of the drag link 10 and the protective sleeve 80 is arranged to have an inner diameter that closely matches the outer diameter of the adjustment tube 70 and the first 12 and second 20 portions. The adjustment tube 70 has a slot 76 that extends along the full length of the adjustment tube 70.
   The protective sleeve 80 is also provided with a slot 82 that extends along the full length of the sleeve 80. The slot 82 can be opened so that the sleeve 80 can envelope the adjustment tube 70 and the threaded pins 30, 40.
   The protective sleeve 80 is provided with at least one plane face 84. Further plane faces (not shown) are arranged around the protective sleeve in a configuration suitable for interfacing with a suitable tool such as a spanner or wrench.
   A metric (not shown) is provided that is indicative of the extent of the overlap between the threaded portion and the adjustment means. In its simplest form the metric is a gauge marked on the screw-threads of the treaded portion although it may instead be a more complex metric used for displaying this information. The protective sleeve 80 is also provided with swaging 86 to prevent the sleeve from moving relative to the first 12 and second 20 portions of the drag link.
   The protective sleeve 80 and the adjustment tube 70 are held in place by a clamp 90. The central clamp 90 has a curved section 92 that has a substantially circular cross section with a diameter similar to that of the outer surface of the protective sleeve 80. The clamp 90 also has a pair of protrusions 94 that are provided with through-holes 96. A bolt 98 is passed through the through-holes and secured in place with a nut 99.
   Once the length of the drag link has been set using the adjustment tube 70, the protective sleeve 80 is placed over the drag link and it is secured with the clamp 90. As the bolt 98 is tightened it compresses the sleeve 80 to close the slot 82. The tightening of the bolt 98 further compresses the adjustment means 70 to close the slot 76 so that the threaded pins 30, 40 cannot move further into the adjustment means 70.

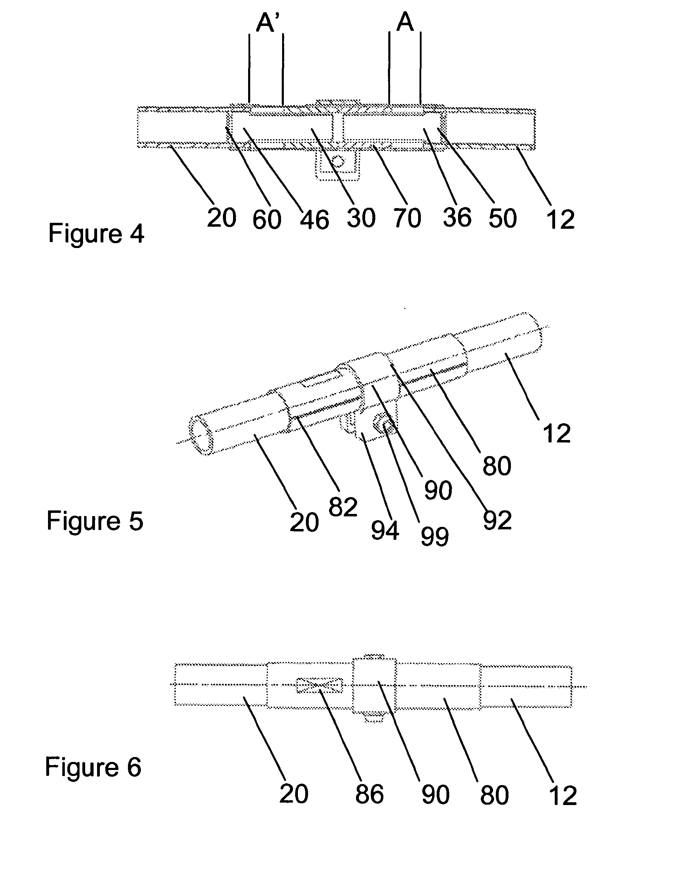

   Figures 4 to 7 show various views of the drag link 10 in an in-use configuration. Figure 5 shows a part-perspective view clearly showing the nut 99 holding the clamp 90 in place around the protective sleeve 80. Figure 6 shows a view of the drag link 10 from above. This view demonstrates that the overall packaging space required by the drag link 10 does not differ considerably from a standard drag link and therefore the drag link 10 could be retrofitted to any vehicle that uses this type of steering system.

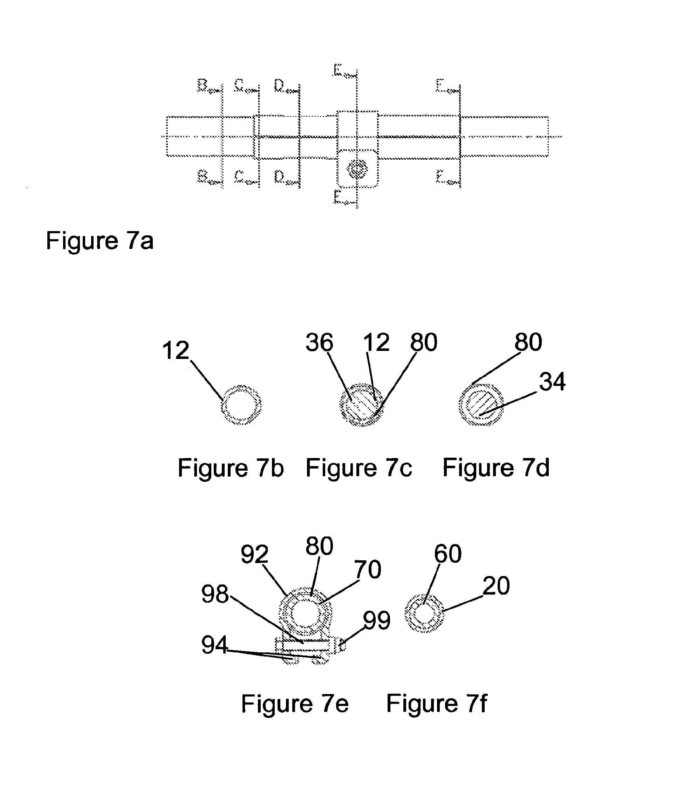

   Figure 7a shows a schematic side view of the drag link 10 with various sections marked onto it. These sections B-B, C-C, D-D, E-E and F-F are shown in Figures 7b-f respectively.
   The section B-B shows a section through the first portion 12 of the drag link 10, confirming that the first portion of the drag link 10 is hollow. The section C-C shows the stopper 36 of the threaded pin 30 which is press-fitted into the first portion 12 of the drag link 10. The first portion 12 of the drag link 10 is surrounded by the protective sleeve 80. The section D-D shows the threaded portion 34 of the threaded pin 30 and the protective sleeve 80 bounding a gap A. The section E-E shows a section through the clamp 90, showing the bolt 98 and the nut 99 causing the clamp 90 to bear on the protective sleeve 80 and the adjustment tube 70. Section F-F shows the stopper ring 60 in position within the second portion 20 of the drag link 10.
   When the drag link is in use, as can best be seen from Figure 4, there are annular gaps A and A'. The gap A is bounded radially inwardly by the screw threaded portion 44 of the threaded pin 40. The gap A is bounded radially outwardly by inner surface of the protective sleeve 80. The gap A is closed at a first end by the abutment face 38 of the stopper 36 and an end face of the first portion 12 of the drag link. The gap A is closed at a second end by an end face of the adjustment tube 70. The gap A' is bounded by the corresponding parts of the threaded pin 30, second portion 20 and the protective sleeve 80.
   Each of the threaded pins 30, 40 is provided with a corresponding stopper ring 50, 60. The stopper rings 50, 60 are configured to move along the tube and deform the tube under excessive load conditions in order to manage the energy. In normal use, the stopper rings 50, 60 complement the function of the stoppers 36, 46 and prevent the movement of the threaded pins 30, 40 relative to the first 12 and second 20 portions of the drag link respectively.

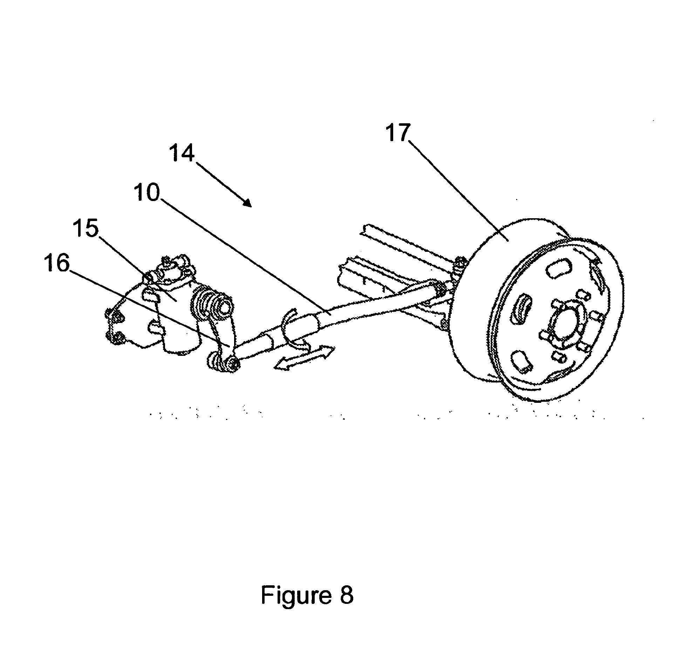

   Figure 8 shows the section of the drag link 10 illustrated in Figures 3 to 7 in the context of a steering system 14. The steering system 14 comprises a steering box 15 that is attached to one of the vehicle chassis rails; a crank 16 that translates rotational motion within the steering box 15 into linear motion of the drag link 10. The drag link 10 conveys the linear motion to a wheel assembly 17 consisting of a road wheel, a hub, a knuckle and a steering arm. The wheel assembly 17 turns in response to the motion of the drag link 10.
   If a vehicle including the steering system 14 incorporating the drag link 10 is subject to a considerable impact, it is important that this impact is not transmitted back through the steering column as this could cause the steering wheel to move relative to the other parts of the vehicle cabin.
   Under the excessive load conditions caused by an impact the stopper rings 50, 60 will allow the threaded pins 30, 40 to move further into the respective first 12 and second 20 portions of the drag link 10 thereby closing gaps A and A' and shortening the drag link 10. This allows some of the force of the impact to be managed by the drag link 10 and thereby minimising the forces transmitted back through the steering system 14 to the steering wheel. The force required to trigger this shortening for the drag link 10 will depend on the vehicle weight and also on the strength criteria for the steering system as a whole. As will be well known to the man skilled in the art, this force is measured by a K-factor which, in turn, is related to the axle weight.

## Claims

1. A drag link for a vehicle, the apparatus comprising:
a first drag link portion (12) and a second drag link portion (20) for a steering system, **characterised in that**:
said drag link having an adjustment means (32) for connecting the first drag link to the second drag link portion to provide continuous variation in the length of the apparatus; wherein:
the adjustment means is an adjustment tube (70) the first drag link portion further comprising a left-handed threaded pin (30) and the second drag link portion further comprises a right-handed threaded pin (40), and the adjustment tube has a left-handed threaded section (44) and a right handed threaded section (34); said drag link being **characterized in that** it comprises at least one stopper means for maintaining the length of the apparatus under normal load conditions and for allowing the first and/or second portion to move relative to the adjustment means under excessive load in order to manage the energy of the excessive load, said stopper means comprises a first stopper ring (50) and second stopper ring (60),
wherein each stopper ring is configured to abut the respective threaded pin and wherein each stopper ring is sized to contact an inner surface of the respective drag link portion and to allow sliding contact with the inner surface of the respective drag link portion under excessive load conditions so that the length of the drag link under normal load conditions and the first and/or second drag links move relative to the adjustment tube under excessive load in order to manage the energy of the excessive load.

2. The drag link according to claim 1, further comprising a protective sleeve (80) and a clamp (90) configured to deform the adjustment tube to prevent relative movement between the threaded pins and the adjustment tube.

3. The drag link according to claim 2, wherein the protective sleeve (80) closely interfaces with the adjustment tube (70).

4. The drag link according to claim 2 or claim 3, wherein the protective sleeve (80) closely interfaces with the first and second drag links(12, 20).

5. An drag link according to any preceding claim, wherein adjustment tube (70) has an outer surface that is configured to accommodate a tool to rotate the adjustment tube to adjust the length of the drag link.

6. The drag link according to any preceding claim, further comprising means for indicating the position of the first drag link portion relative to the adjustment tube.

7. The drag link according to claim 6, wherein the means for indicating the position of the first drag link portion relative to the adjustment tube comprises a gauge on the first portion configured so that the edge of the adjustment tube overlaps the gauge and thereby indicates their relative position.

8. A vehicle having chassis rails and a steering system including a drag link according to any one of the claims 2 to 10, wherein the drag link is configured to lie substantially parallel to the vehicle chassis rails.

## Patentansprüche

1. Lenkzwischenstange für ein Fahrzeug, wobei die Vorrichtung Folgendes umfasst:
einen ersten Lenkzwischenstangenabschnitt (12) und einen zweiten Lenkzwischenstangenabschnitt (20) für ein Lenksystem, **dadurch gekennzeichnet, dass**:
die Lenkzwischenstange ein Einstellmittel (32) aufweist, um die erste Lenkzwischenstange mit dem zweiten Lenkzwischenstangenabschnitt zu verbinden, um die kontinuierliche Veränderung der Länge der Vorrichtung vorzusehen; wobei:
es sich bei dem Einstellmittel um ein Einstellrohr (70) handelt, der erste Lenkzwischenstangenabschnitt weiter einen Linksgewindezapfen (30) umfasst und der zweite Lenkzwischenstangenabschnitt weiter einen Rechtsgewindezapfen (40) umfasst, und das Einstellrohr einen Abschnitt (44) mit Linksgewinde und einen Abschnitt (34) mit Rechtsgewinde aufweist;
wobei die Lenkzwischenstange **dadurch gekennzeichnet ist, dass**
sie mindestens ein Anschlagmittel umfasst, um die Länge der Vorrichtung unter normalen Lastbedingungen aufrechtzuerhalten und um zuzulassen, dass sich der erste und/oder der zweite Abschnitt unter überhöhter Last relativ zu dem Einstellmittel bewegen, um die Energie der überhöhten Last zu handhaben;
die Anschlagmittel einen ersten Anschlagring (50) und einen zweiten Anschlagring (60) umfasst;
wobei die Anschlagringe jeweils dazu ausgebildet sind, an dem jeweiligen Gewindezapfen anzustoßen und wobei die Anschlagringe jeweils dazu bemessen sind, eine Innenfläche des jeweiligen Lenkzwischenstangenabschnitts zu berühren und den gleitenden Kontakt mit der Innenfläche des jeweiligen Lenkzwischenstangenabschnitts unter überhöhten Lastbedingungen zuzulassen, so dass die Länge der Lenkzwischenstange unter normalen Lastbedingungen und die erste und/oder die zweite Lenkzwischenstange sich unter überhöhter Last relativ zu dem Einstellrohr bewegen, um die Energie der überhöhten Last zu handhaben.

2. Lenkzwischenstange nach Anspruch 1, weiter umfassend eine Schutzhülse (80) und eine Klammer (90), die dazu ausgebildet ist, das Einstellrohr zu verformen, um Relativbewegung zwischen den Gewindezapfen und dem Einstellrohr zu verhindern.

3. Lenkzwischenstange nach Anspruch 2, wobei die Schutzhülse (80) eng mit dem Einstellrohr (70) gekoppelt ist.

4. Lenkzwischenstange nach Anspruch 2 oder Anspruch 3, wobei die Schutzhülse (80) eng mit der ersten und der zweiten Lenkzwischenstange (12, 20) gekoppelt ist.

5. Lenkzwischenstange nach einem der vorangehenden Ansprüche, wobei das Einstellrohr (70) eine Außenfläche aufweist, die dazu ausgebildet ist, ein Werkzeug aufzunehmen, um das Einstellrohr zu drehen, um die Länge der Lenkzwischenstange einzustellen.

6. Lenkzwischenstange nach einem der vorangehenden Ansprüche, weiter umfassend ein Mittel zum Anzeigen der Position des ersten Lenkzwischenstangenabschnitts relativ zu dem Einstellrohr.

7. Lenkzwischenstange nach Anspruch 6, wobei das Mittel zum Anzeigen der Position des ersten Lenkzwischenstangenabschnitts relativ zu dem Einstellrohr einen Maßstab an dem ersten Abschnitt umfasst, der derart ausgebildet ist, dass der Rand des Einstellrohrs den Maßstab überlappt und dadurch ihre relative Position anzeigt.

8. Fahrzeug mit Rahmenlängsträgern und einem Lenksystem, das eine Lenkzwischenstange nach einem der Ansprüche 2 bis 10 umfasst, wobei die Lenkzwischenstange dazu ausgebildet ist, im Wesentlichen parallel zu den Fahrzeugrahmen-Längsträgern zu liegen.

## Revendications

1. Biellette de direction pour véhicule, l'appareil comprenant :
une première partie de biellette de direction (12) et une seconde partie de biellette de direction (20) d'un système de direction, **caractérisée en ce que** :
ladite biellette de direction comporte un moyen de réglage (32) pour connecter la première biellette de direction à la seconde partie de biellette de direction afin d'assurer une variation continue de la longueur de l'appareil ; dans laquelle :
le moyen de réglage est un tube de réglage (70), la première partie de biellette de direction comprenant en outre une tige filetée à gauche (30) et la seconde partie de biellette de direction comprenant en outre une tige filetée à droite (40), et le tube de réglage a une section filetée à gauche (44) et une section filetée à droite (34) ; ladite biellette de direction étant **caractérisée en ce qu'**elle comprend au moins un moyen de butée pour maintenir la longueur de l'appareil dans des conditions de charge normale et pour permettre à la première et/ou seconde partie de se déplacer par rapport au moyen de réglage sous une charge excessive afin de gérer l'énergie de la charge excessive, ledit moyen de butée comprend une première bague d'arrêt (50) et une seconde bague d'arrêt (60),
dans laquelle chaque bague d'arrêt est configurée pour butter contre la tige filetée respective et dans laquelle chaque bague d'arrêt est dimensionnée pour faire contact avec une surface interne de la partie de biellette de direction respective et permettre un contact coulissant avec la surface interne de la partie de biellette de direction respective dans des conditions de charge excessive de telle sorte que la longueur de la biellette de direction en conditions de charge normale et les première et/ou seconde biellettes de direction se déplacent par rapport au tube de réglage sous une charge excessive afin de gérer l'énergie de la charge excessive.

2. Biellette de direction selon la revendication 1, comprenant en outre un manchon protecteur (80) et une pince (90) configurés pour déformer le tube de réglage afin d'empêcher le mouvement relatif entre les tiges filetées et le tube de réglage.

3. Biellette de direction selon la revendication 2, dans laquelle le manchon protecteur (80) s'interface intimement avec le tube de réglage (70).

4. Biellette de direction selon la revendication 2 ou la revendication 3, dans laquelle le manchon protecteur (80) s'interface intimement avec les première et seconde biellettes de direction (12, 20).

5. Biellette de direction selon l'une quelconque des revendications précédentes, dans laquelle le tube de réglage (70) a une surface externe qui est configurée pour recevoir un outil servant à faire tourner le tube de réglage afin de régler la longueur de la biellette de direction.

6. Biellette de direction selon l'une quelconque des revendications précédentes, comprenant en outre un moyen pour indiquer la position de la première partie de biellette de direction par rapport au tube de réglage.

7. Biellette de direction selon la revendication 6, dans laquelle le moyen pour indiquer la position de la première partie de biellette de direction par rapport au tube de réglage comprend une jauge sur la première partie configurée de telle sorte que le bord du tube de réglage chevauche la jauge et indique ainsi leur position relative.

8. Véhicule ayant des rails de châssis et un système de direction comportant une biellette de direction selon l'une quelconque des revendications 2 à 10, la biellette de direction étant configurée pour reposer sensiblement parallèlement aux rails de châssis du véhicule.
